Europäisches Patentamt

European Patent Office

Office européen des brevets

(19)

(11) Numéro de publication: **0 223 657**
**B1**

(12) **FASCICULE DE BREVET EUROPEEN**

(45) Date de publication du fascicule du brevet:
25.04.90

(51) Int. Cl.⁴: **G06F 15/332**

(21) Numéro de dépôt: 86402285.0

(22) Date de dépôt: 14.10.86

(54) **Dispositif de calcul d'une transformée de fourier discrète, et son application à la compression d'impulsion dans un système radar.**

(30) Priorité: 16.10.85 FR 8515310

(43) Date de publication de la demande:
27.05.87 Bulletin 87/22

(45) Mention de la délivrance du brevet:
25.04.90 Bulletin 90/17

(84) Etats contractants désignés:
DE GB IT NL SE

(56) Documents cités:
EP-A- 0 219 392
DE-A- 2 732 643
US-A- 3 778 606

IEEE NATIONAL TELECOMMUNICATION
CONFERENCE, Institute of Electrical and Electronics
Engineers, San
Diego, 2-4 décembre 1974, pages 263-265, IEEE, New
York, US; G.M.DILLARD: "Recursive computation of the
discrete fourier transform with applications to an FSK
communication receiver" lled amusement ride" 000

(73) Titulaire: THOMSON-CSF, 51, Esplanade du Général de
Gaulle, F-92800 Puteaux(FR)

(72) Inventeur: Elleaume, Philippe, THOMSON-CSF
SCPI 19, avenue de Messine, F-75008 Paris(FR)

(74) Mandataire: Benoit, Monique et al, THOMSON-CSF
SCPI, F-92045 PARIS LA DEFENSE CEDEX 67(FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

ACTORUM AG

## Description

La présente invention a pour objet un dispositif de calcul d'une transformée de Fourier discrète et glissante, c'est-à-dire une transformée de Fourier discrète appliquée à un signal selon une fenêtre glissant dans le temps.

L'invention a également pour objet l'application de ce dispositif de calcul à un système radar à compression d'impulsion.

Ainsi qu'il est connu, de nombreuses applications font appel au calcul de transformées de Fourier et, parmi elles, les opérations de filtrage qu'on réalise dans un système radar sur le signal reçu. Par ailleurs, les évolutions techniques et technologiques actuelles conduisent de plus en plus à rechercher des solutions numériques pour ces traitements. Dans cette recherche, une des difficultés rencontrées est celle des puissances de calcul nécessaires. Ce problème est particulièrement aigu dans les applications comme les systèmes radars, où les calculs doivent être faits en temps réel.

Dans US-A 3 778 606 est décrit un dispositif de calcul de transormée de Fourier discrète, sur une fenêtre temporelle glissante, utilisant une formule du type récursif.

La présente invention a pour objet un dispositif de calcul de transformée de Fourier discrète, sur une fenêtre temporelle glissante, permettant de minimiser la quantité d'opérations nécessaires tout en s'affranchissant de l'influence de la précision des calculs réalisés à chaque étape. Cela est obtenu d'une part par l'utilisation d'un processus de calcul dans lequel sont éliminées les erreurs dues à la récursivité, processus appelé ici "non récursif" pour simplifier, et d'autre part par une décomposition des opérations de rotation complexe à effectuer qui permet d'en diminuer le nombre.

A cet effet, le dispositif selon l'invention comporte N étages analogues qui, à partir d'échantillons (x) du signal d'entrée, fournissent chacun un signal (X) de la forme :

$$X_k^m = X'^m_k \cdot \exp\left\{j.2\pi. \frac{m.k}{N}\right\} \tag{1}$$

avec :

$$X'^{m+1}_k = X'^m_k + x'_{m+N} - x'_m \tag{2}$$

$$x'_m = x_m \cdot \exp\left\{-j.2\pi. \frac{m.k}{N}\right\} \tag{3}$$

et où $\underline{k}$ est l'indice de l'étage ($0 \leqslant k < N$), $\underline{m}$ l'indice de la fenêtre et N le nombre d'échantillons dans la fenêtre. Au moins l'une des multiplications complexes ci-dessus de la forme

$$\exp\left\{j.2\pi. \frac{m.k}{N}\right\},$$

celle de l'expression (3), qui est une rotation dans le plan complexe, est décomposée en une rotation dans le premier quadrant du plan complexe, commune aux N étages, et un complément de rotation spécifique à chaque étage, réalisé par addition-soustraction.

Plus précisément, l'invention a pour objet un dispositif de calcul tel que défini par la revendication 1.

L'invention a également pour objet l'application de ce dispositif à la réalisation de la compression d'impulsion dans une chaîne de traitement de signal radar, telle que définie par la revendication 6.

D'autres objets, particularités et résultats de l'invention ressortiront de la description suivante, donnée à titre d'exemple non limitatif et illustrée par les dessins annexés, qui représentent :

- la figure 1, un schéma synoptique d'un dispositif de calcul de transformée de Fourier ;
- la figure 2, le schéma synoptique du dispositif de calcul selon l'invention ;
- la figure 3, une variante de la figure précédente ;
- la figure 4, un exemple de réalisation d'une partie de la figure précédente ;
- la figure 5, le schéma de l'un des opérateurs utilisés dans les figures précédentes ;
- la figure 6, un diagramme explicatif ;
- la figure 7, le schéma synoptique d'un récepteur radar et de la chaîne de traitement de signal y relative ;
- la figure 8, le schéma de l'application du dispositif selon l'invention à la compression d'impulsion dans une chaîne de traitement de signal radar ;
- la figure 9, une variante de la figure précédente ;
- la figure 10, un exemple de réalisation pratique d'une partie de la figure précédente.

Sur ces différentes figures, les mêmes références se rapportent aux mêmes éléments.

Avant de décrire dans le détail les figures montrant la réalisation du dispositif de calcul selon l'invention, on procède ci-après à quelques rappels sur la transformée de Fourier discrète.

On rappelle que la transformée de Fourier discrète, également connue sous les initiales DFT (de l'équivalent anglais "Discrete Fourier Transform"), permet de faire correspondre à N échantillons d'un signal $x(t)$ variant dans le temps, un ensemble de N composantes fréquentielles $X_k$, avec $\underline{k}$ variant de 0 à N-1. Si on désigne par $x_n$ l'échantillon d'ordre $\underline{n}$ ($0 \leq n < N-1$) du signal $x(t)$, l'échantillonnage étant effectué avec une période $\tau$ et sur une fenêtre temporelle de durée T, avec $T = N.\tau$, la correspondance est de la forme :

$$X_k = \sum_{n=0}^{N-1} x_n \cdot \exp\left\{- j.2\pi.\frac{k.n}{N}\right\} \; ,$$

la transformée inverse s'écrivant, ainsi qu'il est connu :

$$x_n = \sum_{k=0}^{N-1} X_k \cdot \exp\left\{+ j.2\pi.\frac{k.n}{N}\right\}$$

Lorsqu'on désire appliquer une telle transformée de Fourier à un signal $x(t)$ sur une fenêtre temporelle de N points glissant dans le temps, on obtient pour les composantes X, pour une fenêtre d'indice $\underline{m}$, l'expression suivante :

$$X_k^m = \sum_{n=0}^{N-1} x_{m+n} \cdot \exp\left\{- j.2\pi \cdot \frac{k.n}{N}\right\} \qquad (4)$$

Il apparaît que le calcul de ces composantes nécessite de nombreuses opérations et, par suite, une puissance de calcul importante. Comme indiqué ci-dessus, le problème se pose de façon d'autant plus aiguë que dans certaines applications, comme les systèmes radar, ces calculs doivent être faits en temps réel.

Des calculs réalisés par la Déposante ont montré que les opérations nécessaires étaient pour partie redondantes et celle-ci a élaboré un algorithme de calcul qui minimise le nombre d'opérations nécessaires. Cet algorithme permet d'obtenir le terme $X_k^{m+1}$ à partir de l'échantillon $x_m$ du signal et du terme précédemment calculé ($X_k^m$) de la façon suivante :

$$X_k^{m+1} = \left\{X_k^m + x_{m+N} - x_m\right\} \cdot \exp\left\{+ j.2\pi \cdot \frac{k}{N}\right\} \qquad (5)$$

DEMONSTRATION :

En partant de l'expression (4) ci-dessus et en l'appliquant à une fenêtre ayant glissé d'une période d'échantillonnage (fenêtre d'indice m+1), on obtient :

$$X_k^{m+1} = \sum_{n=0}^{N-1} x_{m+1+n} \cdot \exp\left\{- j.2\pi.\frac{k.n}{N}\right\}$$

On effectue le changement de variable suivant :

$$n' = n + 1$$

d'où :

$$X_k^{m+1} = \sum_{n'=1}^{N} x_{m+n'} \cdot \exp\left\{- j.2\pi.\frac{k.(n'-1)}{N}\right\}$$

ou encore :

$$X_k^{m+1} = \left[ \sum_{n'=1}^{N} x_{m+n'} \cdot \exp\left\{- j.2\pi. \frac{k.n'}{N}\right\}\right] \cdot \exp\left\{+ j.2\pi. \frac{k}{N}\right\}$$

$$= \left[ \sum_{n'=0}^{N-1} x_{m+n'} \cdot \exp\left\{- j.2\pi. \frac{k.n'}{N}\right\} - x_m \cdot \exp\left\{j.2\pi. \frac{k.0}{N}\right\}\right.$$

$$\left. + x_{m+N} \cdot \exp\left\{- j.2\pi. \frac{k.N}{N}\right\}\right] \cdot \exp\left\{+ j.2\pi. \frac{k}{N}\right\}$$

$$= \left\{X_k^m + x_{m+N} - x_m\right\} \cdot \exp\left\{+ j.2\pi. \frac{k}{N}\right\}$$

ce qui est l'expression (5) ci-dessus.

Une telle expression est du type récursif, c'est-à-dire que la $(m+1)^{ième}$ valeur de la grandeur $X_k^{m+1}$ dépend de la valeur obtenue pour la grandeur précédente $X_k^m$.

Dans certains cas, il peut être préférable de s'affranchir de l'exigence de précision de calcul à chaque étape.

Des calculs réalisés par la Déposante montrent que l'expression (5) ci-dessus peut être exprimée sous la forme du système d'équations suivant, mentionné plus haut :

$$X_k^m = X'^m_k \cdot \exp\left\{j.2\pi. \frac{m.k}{N}\right\} \qquad (1)$$

$$X'^{m+1}_k = X'^m_k + x'_{m+N} - x'_m \qquad (2)$$

$$x'_m = x_m \cdot \exp\left\{- j.2\pi. \frac{m.k}{N}\right\} \qquad (3)$$

DEMONSTRATION :

On peut, dans l'expression (5), effectuer le changement de variable suivant :

$$X'^m_k = X_k^m \cdot \exp\left\{- j.2\pi. \frac{m.k}{N}\right\}$$

c'est-à-dire que, inversement :

$$X_k^m = X'^m_k \cdot \exp\left\{+ j.2\pi. \frac{m.k}{N}\right\} \quad ,$$

qui est l'équation (1) ci-dessus.

En reportant dans l'expression (5), on obtient :

$$X'^{m+1}_k \cdot \exp\left\{j.2\pi. \frac{(m+1)k}{N}\right\} = \left[X'^m_k \cdot \exp j.2\pi \frac{m.k}{N} + x_{m+N} - x_m\right]$$

$$\cdot \exp\left\{j.2\pi. \frac{k}{N}\right\}$$

ou encore :

4

$$X_k^{m+1} = X_k^m + x_{m+N} \cdot \exp\left\{ j.2\pi. \frac{m.k}{N} \right\} - x_m \cdot \exp\left\{ - j.2\pi. \frac{m.k}{N} \right\}$$

Si l'on pose le changement de variable suivant :

$$x'_m = x_m \cdot \exp\left\{ - j.2\pi. \frac{m.k}{N} \right\},$$

qui est l'équation (3) ci-dessus, on retrouve l'expression suivante, qui est l'équation (2) ci-dessus :

$$X'^{m+1}_k = X'^m_k + x'_{m+N} - x'_m$$

Il apparaît ainsi que l'ensemble des équations (1), (2) et (3) forme une nouvelle expression de la DFT glissante dans laquelle il n'existe plus d'erreur introduite par la récursivité.

En effet, dans l'expression (5) ci-dessus, tous les facteurs, et particulièrement l'échantillon entrant ($x_{m+N}$) et l'échantillon sortant ($x_n$) de la fenêtre, sont multipliés par l'exponnentielle complexe

$$\exp\left\{ j.2\pi. \frac{K}{N} \right\}$$

qu'on ne sait pas calculer exactement en pratique. Au contraire, dans l'expression (2), qui est la seule du système d'équation (1) à (3) à être du type récursif, les termes "entrant" ($x'_{m+N}$) et "sortant" ($x'_m$) sont indépendants de l'exponentielle complexe précédente et leur valeur, une fois obtenue, reste constante pendant toute la durée du passage de la fenêtre, éliminant ainsi les effets de l'erreur sur leur calcul. De la sorte, bein que le processus soit toujours de type récursif, il n'existe plus dans son exécution d'erreur introduite par la récursivité. Pour cette raison, ce processus est appelé ici "non récursif", pour simplifier.

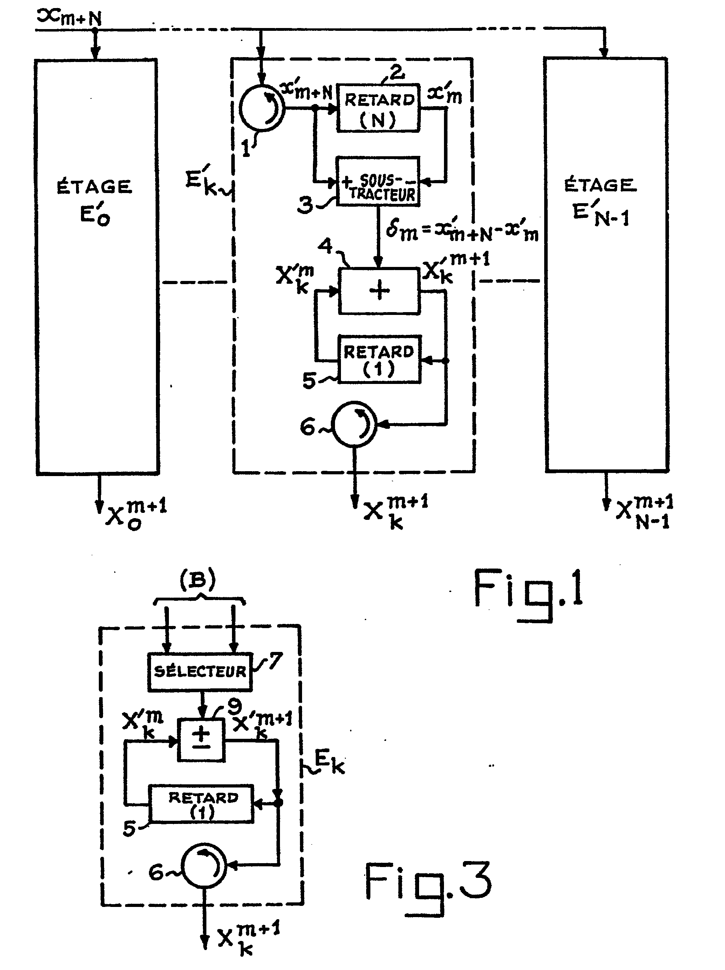

La figure 1 représente un dispositif assurant le calcul d'une DFT glissante "non récursive" telle que définie par les équations (1), (2) et (3). Aussi ce dispositif est déjà décrit dans EP-A 0 219 392, qui est cité en vertu de l'article 54(3) et (4) CBE.

Sur cette figure 1, on trouve un ensemble de N étages répérés $E'_0...E'_k...E'_{N-1}$, recevant chacun un échantillon $x_{m+N}$ du signal x(t) sur lequel on désire réaliser une transformation de Fourier. Chacun des étages fournit en sortie un signal $X^{m+1}$, portant l'indice (0 ....k...N-1) de l'étage.

Les différents étages E' sont identiques. La constitution des étages a été représentée pour l'un deux, d'indice k.

Chaque étage comporte donc successivement un opérateur 1 de rotation complexe, qui reçoit l'échantillon $x_{m+N}$ et qui fournit en sortie le signal $x'_{m+N}$ tel que défini par l'équation (3). Ce dernier signal est fourni à un soustracteur 3, d'une part directement sur l'entrée positive de ce soustracteur et, d'autre part, sur l'entrée négative de ce dernier par l'intermédiaire d'un circuit de retard 2. Le circuit 2 confère un retard de N périodes d'échantillonnage au signal $x'_{m+N}$ : le signal de sortie du circuit 2 est alors noté $x'_m$. Le circuit de retard 2 est par exemple réalisé à l'aide d'un registre à décalage à N étages. Le signal de sortie du soustracteur 3, qui est alors de la forme $\delta_m = x'_{m+N} - x'_m{}'$, est founi à un additionneur 4 qui reçoit par ailleurs son propre signal de sortie tel qu'il a été élaboré à l'étape précédente, c'est-à-dire que la sortie de l'additionneur 4 est reliée à son entrée par l'intermédiaire d'un circuit 5 retardant le signal d'une périose $\tau$; ce signal de sortie de l'additionneur est le signal $X'^{m+1}_k$ ainsi que défini par l'équation (2). Ce signal de sortie de l'addititionneur 4 est founi par ailleurs à un second opérateur de rotation complexe, repéré 6, qui permet à partir du signal $X'^{m+1}_k$ d'obtenir le signal $X^{m+1}_k$ comme défini par l'équation (1) ci-dessus, en lui faisant subir une rotation complexe

$$\exp\left\{ j.2\pi.k \frac{m+1}{N} \right\}.$$

Il est à noter que, lors de l'initialisation du dispositif, lorsqu'est reçu le premier échantillon ($x_0$), tous les opérateurs et registres doivent être à zéro.

Lorsque le nombre d'étages E' devient grand, il est souhaitable de réduire le nombre d'opérations nécessaires pour les raisons de puissance de calcul exposées plus haut.

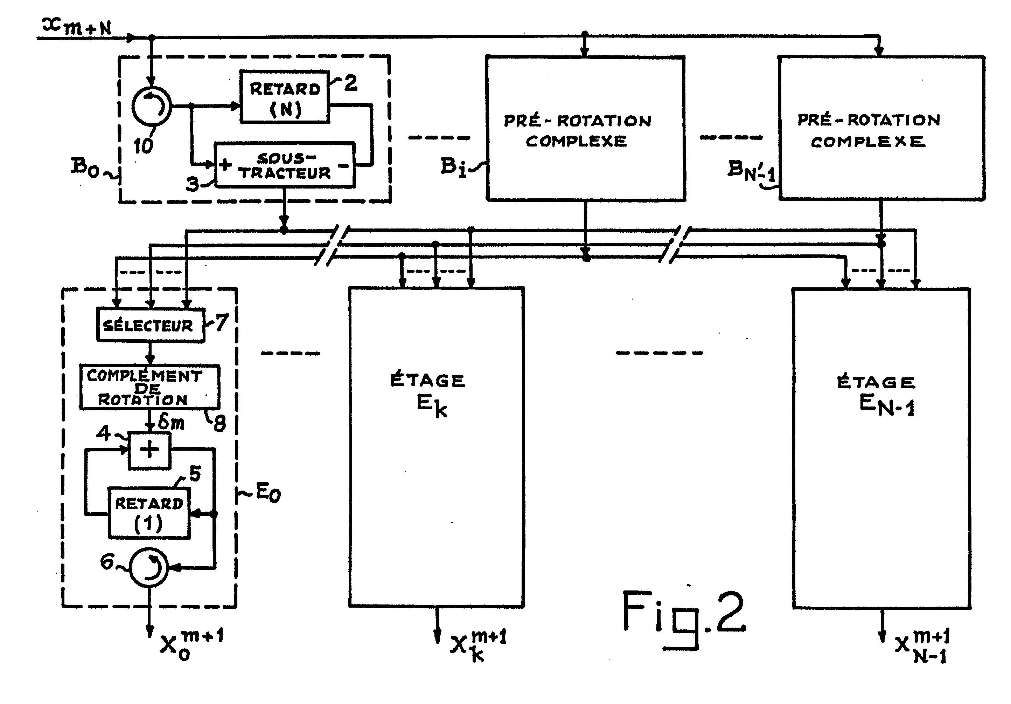

Selon l'invention, on diminue ce nombre d'opérations nécessaires en choisissant pour N un multiple de 4 et en décomposant la rotation complexe réalisée par l'opérateur 1 en une rotation dans le premier quadrant du plan complexe, effectuée de façon commune à tous les étages, puis une rotation complémentaire pour chaque étage égale à zéro, une, deux ou trois fois $\pi/2$, toujours dans le plan complexe. Cette structure est illustrée sur la figure 2, décrite plus loin.

En effet, les rotations effectuées par l'operateur 1 de la figure 1, comme d'ailleurs celles de l'opérateur 6, sont de la forme:

$$\exp \left\{ j.2\pi. \frac{p}{N} \right\} \tag{6}$$

où $\underline{p}$ est égal à k.m dans le cas de l'opérateur 1, au signe près.

Selon l'invention, on calcule toutes les valeurs possibles de la rotation dans le premier quadrant, c'est-à-dire pour toutes les valeurs de $\underline{p}$ (notées p') comprises entre 0 et N', avec N' = N/4. Pour obtenir les valeurs correspondant aux autres quadrants du plan complexe, on multiplie par les grandeurs suivantes :

1) lorsque $\underline{p}$ appartient au deuxième quadrant (N' ≦ p < 2N'), on peut écrire :

$$p = p' + N' \text{ avec } 0 \leqq p' < N' \text{ et } N' = N/4$$

d'où :

$$\exp \left\{ j.2\pi. \frac{p}{N} \right\} = \exp \left\{ j.2\pi. \frac{p'+N'}{4N'} \right\}$$

$$= \exp \left\{ j. \frac{\pi}{2} \right\} . \exp \left\{ j.2\pi. \frac{p'}{N'} \right\}$$

$$= j . \exp \left\{ j.2\pi. \frac{p'}{N'} \right\} \tag{7}$$

Il apparaît donc que, dans ce cas, la rotation initiale se ramène à une rotation dans le premier quadrant complétée par une multiplication par j, ce qui peut être réalisé simplement par croisement entre partie réelle et partie imaginaire de la grandeur sur laquelle on opère la rotation ;

2) de la même manière, on montre que si le nombre $\underline{p}$ est compris entre 2N' et 3N', conduisant à une rotation complexe située dans le troisième quadrant, l'expression (6) ci-dessus se ramène à l'expression suivante ;

$$\exp \left\{ j.2\pi \frac{p}{N} \right\} = - \exp \left\{ j.2\pi. \frac{p'}{N'} \right\} \tag{8}$$

c'est-à-dire à un changement de signe ;

3) de même encore, lorsque le nombre $\underline{p}$ conduit à une rotation complexe dans le quatrième quadrant, c'est-à-dire $\underline{p}$ compris entre 3N' et 4N', on obtient :

$$\exp \left\{ j.2\pi. \frac{p}{N} \right\} = - j. \exp \left\{ j.2\pi. \frac{p'}{N'} \right\} \tag{9}$$

c'est-à-dire un changement de signe et un croisement des parties réelle et imaginaire.

Sur le schéma de la figure 2, on a donc décomposé la rotation complexe effectuée par l'opérateur 1 dans chacun des étages sur la figure 1, dite ci-après pré-rotation par opposition à la rotation effectuée par l'opérateur 6 qui est dite post-rotation, en une pré-rotation commune à tous les étages (blocs B sur la figure 2), et un complément de pré-rotation qui s'effectue de façon spécifique à chacun des étages.

Plus précisément, la partie commune à tous les étages comporte autant de blocs B, notés $B_0 ... B_i ... B_{N'-1}$, que de valeurs possibles pour p' (on rappelle que $0 \leqq p' < N'-1$). Chacun des blocs $B_i$ comporte donc un opérateur de rotation complexe 10, analogue à l'opérateur 1 de la figure 1 mais effectuant la rotation complexe :

$$\exp \left\{ j.2\pi. \frac{p'}{N'} \right\}$$

sur l'échantillon $x_{m+N}$ pour p' = i. Etant donné que les opérations suivantes sont un retard de N périodes (bloc 2 sur la figure 1) et une soustraction (bloc 3) et que ces opérations n'impliquent pas de déphasage (en effet, on a :

$$\exp\left\{j.2\pi.\frac{k.m}{N}\right\} = \exp\left\{j.2\pi.\frac{k(m+N)}{N}\right\} ),$$

les blocs 2 et 3 sont intégrés à chacun des blocs B, communs à l'ensemble des étages E.

Chacun des étages, maintenant repérés E, comporte les éléments 4, 5 et 6 décrits figure 1 mais comporte en outre, en amont, un opérateur 8 réalisant le complément de pré-rotation spécifique à chaque étage, précédé d'un sélecteur 7 permettant de choisir celle des prérotations complexes données par les blocs B qui convient à l'étage considéré. Les sélecteurs 7 sont par exemple réalisés à l'aide de multiplexeurs, sous commande d'un séquenceur assurant le séquencement des opérations de l'ensemble du dispositif. L'opérateur 8 réalise le complément de rotation par tout moyen connu permettant de réaliser un changement de signe ou d'inverser partie réelle et partie imaginaire, comme montré par les égalités (7), (8) et (9) ci-dessus.

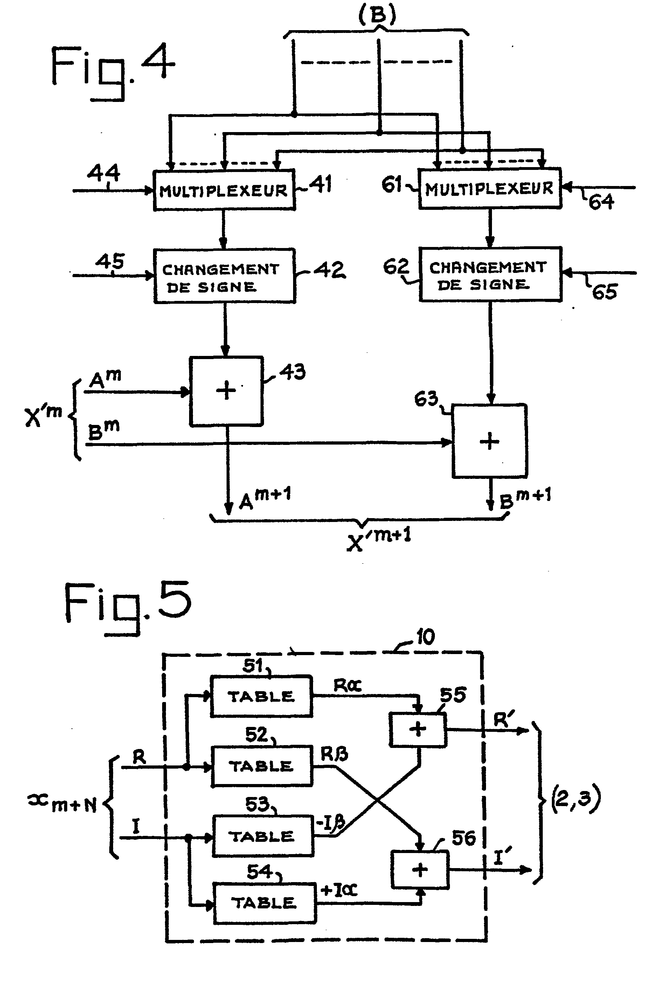

La figure 3 représente une variante de réalisation des étages E dans laquelle le calcul des compléments de pré-rotation (opérateur 8 sur la figure 2) et l'addition réalisée dans l'opérateur 4 sont regroupés et réalisées par un additionneur-soustracteur 9 se substituant aux opérateurs 4 et 8 précédents.

En effet, le complément de rotation ($\phi$) n'a que quatre valeurs possibles :

$$0, \frac{\pi}{2}, \pi \text{ ou } \frac{3\pi}{2}.$$

Si on représente les grandeurs complexes à additionner $\delta_m$ et $X'_k{}^{m+1}$ par leurs parties réelle et imaginaire de la façon suivante :

$$\delta_m = a + jb$$
$$X'_k{}^m = A^m + jB^m,$$

la grandeur de sortie de l'opérateur 9, $X'_k{}^{m+1}$, s'écrit de la même manière :

$$X'_k{}^{m+1} = A^{m+1} + jB^{m+1} \; ; 10$$

on a alors, pour les différentes valeurs de $\phi$:

- 1) pour $\phi = 0$, on additionne respectivement parties réelles et parties imaginaires de $\delta_m$ et $X'_k{}^m$, ce qui donne :

$$X'_k{}^{m+1} \begin{cases} A^{m+1} = A^m + a \\ B^{m+1} = B^m + b \end{cases}$$

-2) pour $\phi = \pi/2$, on croise parties réelles et imaginaires de $\delta_m$ et $X'_k{}^m$ avec changement de signe :

$$X'_k{}^{m+1} \begin{cases} A^{m+1} = A^m - b \\ B^{m+1} = B^m + a \end{cases}$$

- 3) pour $\phi = \pi$ on change les signes :

$$X'_k{}^{m+1} \begin{cases} A^{m+1} = A^m - a \\ B^{m+1} = B^m - b \end{cases}$$

- 4) enfin, pour $\phi = 3\pi/2$, on croise à nouveau parties réelles et parties imaginaires, avec changement de signe :

$$X'^{m+1}_k \qquad \begin{aligned} A^{m+1} &= A^m + b \\ B^{m+1} &= B^m - a \end{aligned}$$

A titre d'exemple, on a représenté sur la figure 4 un mode de réalisation pratique des éléments 7 et 9 de la figure 3.

Dans cet exemple de réalisation, on a disposé deux séries de trois éléments analogues, 41 à 43 et 61 à 63, traitant respectivement les parties réelles et imaginaires des grandeurs fournies par les blocs B et du signal $X'^m$.

Il est à noter que, dans l'ensemble des circuits décrits ici à titre d'exemple, les grandeurs complexes sont exprimées sous forme partie réelle - partie imaginaire, soit sous forme parallèle (exemple de la figure 4), soit sous forme série.

Les signaux en provenance des blocs B sont donc fournis en parallèle à deux multiplexeurs 41 et 61 qui, en fonction de l'indice courant de l'échantillon x (commandes 44 et 64 du séquenceur du dispositif), sélectionnent chacun une valeur parmi les 2N' valeurs reçues (N' parties réelles et N' parties imaginaires).

L'additionneur-soustracteur 9 de la figure 3 est décomposé en un dispositif de changement de signe (42, 62) suivi par un additionneur (43, 63). Les dispositifs 42 et 62 opèrent le cas échéant un changement de signe de la valeur (réelle ou imaginaire, respectivement) qu'ils traitent en fonction du complément de rotation à effectuer pour l'étage considéré ; une commande 45, 65 leur est adressée à cet effet par le séquenceur. Les additionneurs 43 et 63 additionnent alors les signaux fournis par les dispositifs 42 et 62 aux valeurs de $X_{m'}$,($A^m$ et $B^m$) pour donner les parties réelle ($A^{m+1}$) et imaginaire ($B^{m+1}$) de $X'^{m+1}$.

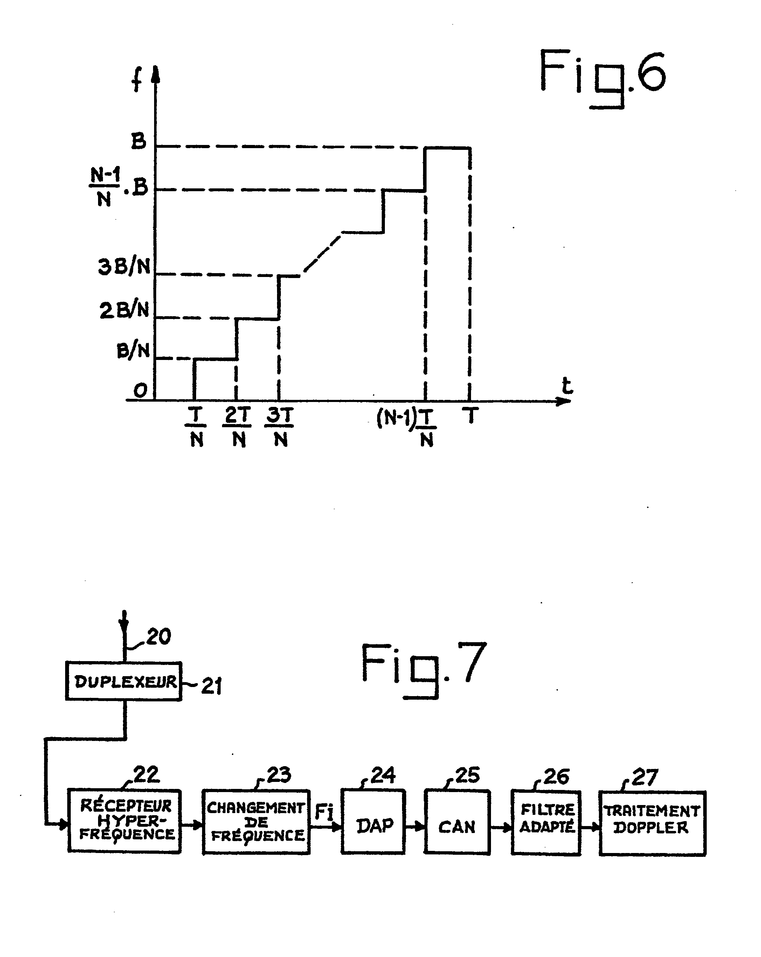

Sur la figure 5, on a représenté à titre d'exemple un mode de réalisation pratique des opérateurs de rotation complexe, tel que l'opérateur 10 de la figure 2.

La donnée $x_{m+N}$ d'entrée de l'opérateur 10 est représentée distinctement par sa partie réelle et sa partie imaginaire, notées respectivement R et I.

Ainsi qu'il est connu, opérer une rotation complexe exp -

$$\left\{ j.2\pi. \frac{p'}{N} \right\}.$$

sur une grandeur complexe R + jI revient à effectuer le produit :

$$(R + jI) . (\alpha + j\beta),$$

si $\alpha$ et sont les parties réelle et imaginaire de l'expression exp -

$$\left\{ j.2\pi. \frac{p'}{N}. \right\}.$$

Le développement du produit montre qu'il est équivalent à :

$$(R\alpha - I\beta) + j (R\beta + I \alpha)$$

Sur la figure 5, on a représenté l'opérateur 10 réalisant cette dernière opération.

Il comporte quatre mémoires 51-54, par exemple du type ROM, recevant les deux premières la donnée R et les deux dernières la donnée I. Ces mémoires fournissent les grandeurs $R\alpha$, R , -I et $I\alpha$, respectivement. La première et la troisième de ces informations sont additionnées dans un additionneur 55 pour former la partie réelle R' de la grandeur, dirigée vers les opérateurs 2 et 3 (figure 2). Les deuxième et quatrième de ces informations sont additionnées dans un additionneur 56 pour former la partie imaginaire I', dirigée vers les opérateurs 2 et 3.

Dans une variante de réalisation, il est possible de n'utiliser que deux mémoires et un seul additionneur : celles-ci fournissent, sur commande extérieure, dans un premier temps, les grandeurs $R\alpha$ et -$I\beta$ qui, additionnées, forment la partie réelle R' ; dans un deuxième temps, les mémoires fournissent les deux autres grandeurs (R et $I\alpha$), qui sont additionnées à leur tour pour donner I'.

L'opérateur 6 de la figure 2 peut être réamosé de façon analogue, sous réserve de tenir compte dans la constitution des tables du signe "plus" de l'exponentielle et de prévoir en outre, pour chaque table, une entrée de commande en provenance du séquenceur, fournissant la valeur de mI+1 (modulo N).

Ainsi qu'il est dit ci-dessus, un dispositif de calcul tel que celui décrit sur la figure 1 peut être utilisé dans une chaîne de traitement d'un radar à compression d'impulsion pour constituer un filtre adapté.

On rappelle que le traitement optimal qu'on puisse faire subir à un signal dans le bruit est de le faire passer par un filtre "adapté" au signal, c'est-à-dire un filtre dont la transmittance est le conjugué du spectre dudit signal.

On rappelle également que la compression d'impulsions est un procédé ayant pour but d'améliorer le pouvoir de résolution en distance d'un radar, tout en permettant d'avoir une durée T grande de l'impulsion. Ce procédé consiste à disposer une ligne dispersive (en fréquence) sur la chaîne d'émission du radar, qui a pour effet d'allonger (ou "dilater") le signal, et de compenser cet effet à la réception, c'est-à-dire de comprimer le signal reçu. En pratique, pour des raisons de résistance à l'effet Doppler, pour réaliser le signal "dilaté" on choisit souvent une rampe de fréquence, c'est-à-dire une modulation linéaire de fréquence. Le problème qui se pose alors à la réception est de réaliser un filtre qui soit adapté à la rampe de fréquence en question. C'est le problème qui est envisagé ci-après.

Par ailleurs, lorsqu'on utilise des techniques numériques, on cherche souvent à réaliser une approximation de la rampe de fréquence telle qu'elle facilite l'opération de filtrage adapté réalisée ultérieurement. Une forme de cette approximation est connue sous le nom de code de Frank. On rappelle qu'on entend par "code" un signal dont les caractéristiques peuvent varier dans le temps, cette variation étant déterministe ou pseudo-aléatoire (connue de l'émetteur). On rappelle également que l'approximation de Frank s'écrit :

$$x(t) = \exp\left\{j.2\pi.f(t).t\right\}$$

$$\text{où : } .t \in [0 ; T[ ;$$

$$.f \in [0 ; B[ \quad \text{et} \quad f(t) = \frac{k(t)}{N}.B ;$$

. B est la bande de fréquence du signal x(t).

Le signal x(t) se présente donc comme illustré figure 6 : une série de N marches d'escalier s'étendant dans le temps sur une durée T ; chaque marche, ou palier, d'ordre $\underline{i}$ est caractérisé par une

$$\text{fréquence } \frac{iB}{N} \text{ et une durée } \frac{T}{N}.$$

On choisit, avec les notations précédentes :

$$BT = N^2$$

$$f_e = B \overset{13}{\longleftrightarrow} \tau = \frac{1}{B},$$

ce qui conduit à avoir un nombre entier de sinusoïdes complexes par palier et les différents paliers se raccordent donc sans saut de phase. En outre, ayant N paliers, on a N échantillons par palier.

Il est connu de réaliser le filtrage adapté des codes de Frank à l'aide des algorithmes de transformée de Fourier rapide (FFT pour "Fast Fourier Transform" en anglais) en posant N=2^q, ce qui conduit à :

$$B.T = (2^q)^2 ;$$

en effet, les algorithmes de FFT sont plus particulièrement adaptés aux puissances de 2.

Toutefois, dans ce cas, le nombre de taux de compression autorisés est limité (on rappelle que le taux de compression est donné par le produit B.T). Par exemple, pour N entier compris entre 1 et 16, les seuls taux de compression autorisés sont 1, 4, 16, 64 et 256. Cela constitue un inconvénient principalement pour les deux raisons suivantes :
- le fait d'être limité à quelques valeurs précises du produit BT est gênant du fait que le choix de chacun des paramètres B et T n'est pas libre : la durée T est conditionnée par la puissance et la portée souhaitées pour le radar, alors que la bande de fréquence B est conditionnée par la résolution souhaitée ;
- l'écart entre les différents taux de compression possibles est très grand pour les valeurs élevées du produit BT or, dans certaines applications (les radars multimodes), on souhaite faire varier ces paramètres de façon plus fine.

Selon l'invention, pour réaliser un filtre adapté à chaque palier, on utilise une DFT glissante telle que définie par les expressions (1), (2) et (3) ci-dessus. En effet, on montre ci-après que la transformée de Fourier discrète et glissante est le filtre adapté à un signal formé d'un nombre entier de sinusoïdes complexes.

Soit un signal x(t) constitué d'un nombre entier de sinusoïdes complexes :

$$x(t) = \exp\left\{j.2\pi.f.t\right\}$$

$$\text{avec} : \quad . \, t \in [0\,;\,T[$$

$$. \, f = k.\frac{1}{T}$$

Si on choisit une fréquence d'échantillonnage $f_e$ telle que :

$$f_e = N.\frac{1}{T} \quad (\text{avec } N > k_{max}) \ ,$$

on peut écrire le signal échantillonné $x'(t)$ sous la forme :

$$x'(t) = \sum_{n=0}^{N-1} x_n . \delta\,(t-n\tau) \qquad (10)$$

où : . $\delta$ est la fonction de Dirac ;
. $\tau$ est la période d'échantillonnage ($\tau = 1/f_e$) ;
. $x_n$ est le signal $x(t)$ échantillonné à la $n^{\text{ème}}$ période ($\tau$) d'échantillonnage :

$$x_n = \exp\left\{j.2\pi.f.n.\tau\right\}$$

$$= \exp\left\{j.2\pi.\frac{k.n}{N}\right\} \qquad (11)$$

La transmittance $H(f)$ du filtre adapté au signal échantillonné $x'(t)$ est le complexe conjugué du spectre $X'(f)$ de ce signal :

$$H(f) = \overline{X'(f)}$$

ou, dans le domaine temporel :

$$h(t) = \overline{x'(-t)} \ , \qquad (12)$$

$h(t)$ étant la transformée de Fourier de la transmittance $H(f)$. Des expressions (10), (11) et (12), on déduit :

$$h(t) = \sum_{n=0}^{N-1} \exp\left\{-j.2\pi.\frac{k.n}{N}\right\} \ . \ \delta(-t-n\tau) \qquad (13)$$

Si on applique un signal $e(t)$ à un filtre dont la réponse est donnée par l'expression (13), on obtient en sortie du filtre un signal $s(t)$ défini par :

$$s(t) = h(t) \times e(t)$$

où le signe $\times$ représente un produit de convolution, c'est-à-dire que :

$$s(t) = \int_{-\infty}^{+\infty} e\,(t-u) . h(u) . du$$

En remplaçant dans cette dernière expression $h(u)$ par sa valeur donnée par l'expression (13), on obtient:

$$s(t) = \sum_{n=0}^{N-1} \left\{ \int_{-\infty}^{+\infty} e(t-u) \cdot \delta(-u-n\tau) \cdot du \right\} \cdot \exp\left\{-j.2\pi.\frac{k.n}{N}\right\}$$

$$= \sum_{n=0}^{N-1} e(t+n\tau) \cdot \exp\left\{-j.2\pi.\frac{k.n}{N}\right\}$$

Si on considère seulement le signal de sortie après échantillonnage, c'est-à-dire $s(m\tau)$, noté $s_m$, on a :

$$s_m = \sum_{n=0}^{N-1} e_{m+n} \cdot \exp\left\{-j.2\pi.\frac{k.n}{N}\right\}$$

Cette expression est de la même forme que l'expression (4) ci-dessus, c'est-à-dire que le signal de sortie (s) s'obtient en réalisant une DFT glissante sur le signal d'entrée (e).

Selon l'invention, on réalise donc une compression d'impulsion dans une chaîne radar à partir du dispositif décrit figure 2.

La figure 7 rappelle schématiquement la constitution d'une chaîne de réception et de traitement d'un signal radar à compression d'impulsion dans laquelle le dispositif selon l'invention est susceptible d'être inséré.

Le signal radar est reçu sur une antenne 20 et il est dirigé, par l'intermédiaire d'un duplexeur 21, à la partie réception du radar. Cette partie réception comporte principalement, en cascade :
- un récepteur hyperfréquence 22 ;
- un ensemble 23 de circuits de changement de fréquence, assurant la transposition du signal hyperfréquence reçu en un signal en fréquence intermédiaire (FI) ;
- un dispositif 24 de démodulation d'amplitude et de phase (DAP) ;
- un convertisseur analogique-numérique (CAN) 25, assurant la numérisation du signal radar ;
- un filtre adapté 26 ;
- un ensemble 27 de circuits assurant, le cas échéant, les traitements Doppler.

Il est à noter que le filtre adapté 26 peut être éventuellement placé après les circuits de traitements Doppler 27 . Dans le même ordre d'idée, lorsque le démodulateur 24 est réalisé numériquement, il peut être placé à un endroit quelconque de la chaîne, bien entendu après le convertisseur 25.

Selon l'invention, le filtre adapté 26 est réalisé par un dispositif de calcul d'une transformée de Fourier discrète et glissante telle que définie par les équations (1), (2) et (3), lorsque le signal émis est une rampe de linéaire de fréquence dans lequel le produit BT est égal au carré d'un nombre entier ($N^2$), l'avantage de cette réalisation étant de réduire les prémultiplications complexes à condition que N soit un multiple de quatre.

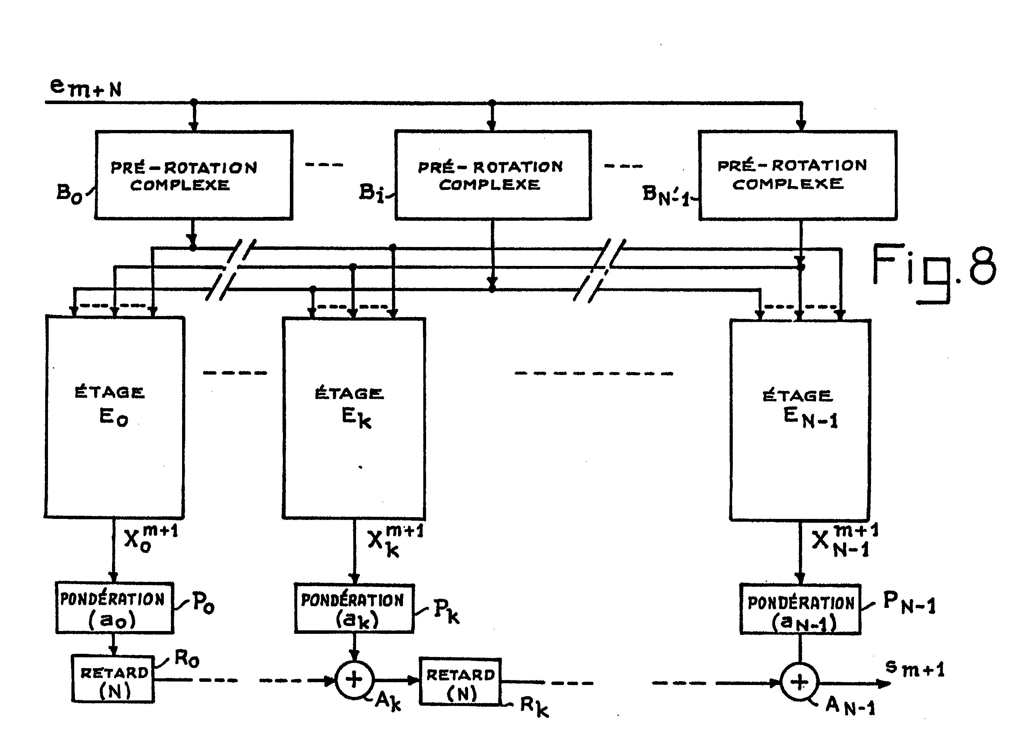

La figure 8 représente un mode de réalisation de ce filtre.

Sur la figure 8, on retrouve les N' blocs B de pré-rotation complexe, reliés chacun aux N étages E en parallèle. L'étage $E_k$ fournit à sa sortie la quantité $X_k^{m+1}$. Les étages E sont chacun constitués comme représenté sur la figure 2 ou la figure 3.

Chacune des quantités $X_k^{m+1}$ est sommée (additionneur $A_k$) à la quantité précédente $X_{k-1}^{m+1}$ après avoir subi un retard $R_k = N$ périodes d'échantillonnage. La sommation est réalisée jusqu'au dernier étage $E_{N-1}$ pour produire le signal de sortie $s_{m+1}$.

L'insertion d'un retard de N périodes au niveau de chaque étage E est rendue nécessaire par le fait qu'avec le système de la figure 8, on calcule simultanément le premier point de chacun des N paliers qui sont séparés les uns des autres par N périodes d'échantillonnage ; pour obtenir le signal s, il est donc nécessaire d'effectuer des corrections. Bien entendu cette correction n'est nécessaire que dans le cas où les N paliers sont émis successivement. S'ils sont émis simultanément, les retards $R_k$ ne sont plus utiles.

En outre, dans le mode de réalisation de la figure 8, un dispositif de pondération $P_k$ est interposé entre la sortie de l'étage $E_k$ et l'additionneur $A_k$. Il s'agit d'une pondération d'amplitude, optionnelle, dont l'objet est d'abaisser le niveau des lobes secondaires. Toutefois, elle engendre des pertes du fait qu'on s'écarte alors du filtre adapté théorique.

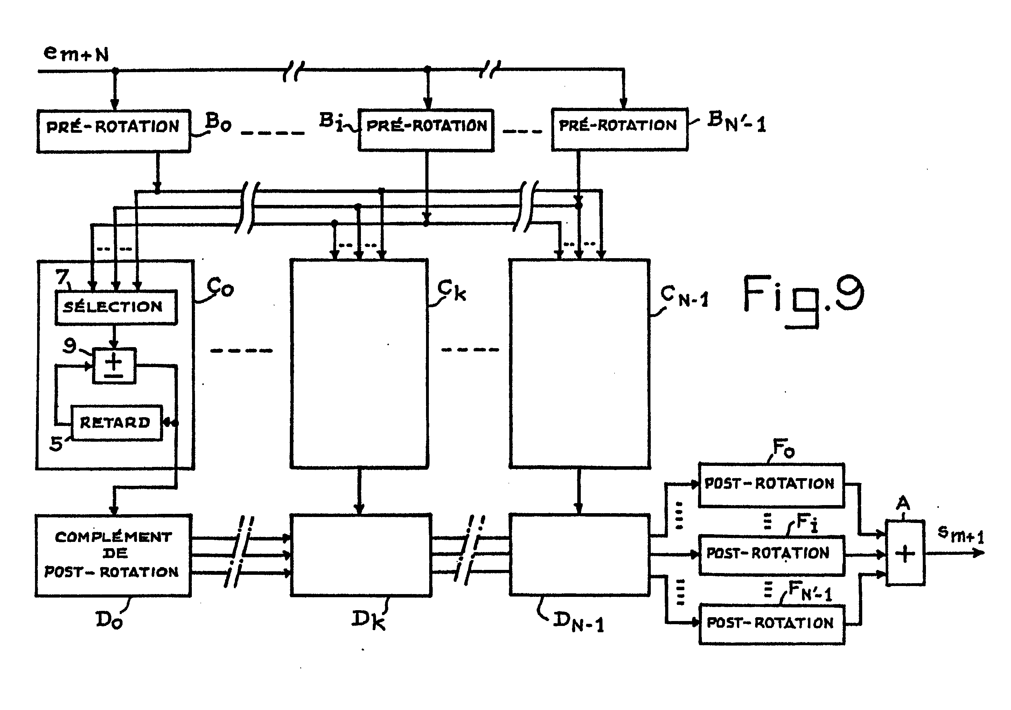

La figure 9 représente une variante de réalisation du filtre de la figure 8 dans lequel on réduit encore le nombre d'opérateurs de rotation complexe nécessaire.

Cela est réalisé en supprimant l'opérateur 6 de la figure 2 placé dans chacun des étages (opérateur dont on rappelle qu'il réalise une post-rotation complexe selon l'expression (1)) et en le remplaçant, de façon analogue à ce qui est fait au niveau des blocs B de pré-rotation complexe, par une post-rotation complexe réalisée dans le premier quadrant du plan complexe seulement, complétée par une post-rotation complémentaire réalisée pour chacun des étages E. Ce complément de post-rotation est réalisé de préférence en même temps que l'addition $A_k$, de façon analogue à ce qui est décrit figure 3 pour la pré-rotation.

Sur la figure 9, on retrouve donc les N' blocs B de pré-rotation complexe alimentant en parallèle les N étages. Ces derniers sont décomposés en deux parties :
- une partie repérée C, reprenant les mêmes éléments que les étages E en dehors de la post-rotation 6, c'est-à-dire les blocs 7, 9 et 5 de la figure 3 comme représenté sur la figure 9, ou les blocs 7, 8, 4 et 5 de la figure 2 ;
- une partie repérée D, réalisant le complément de post-rotation spécifique à chaque étage et lui adjoignant, dans un mode de réalisation préféré, l'addition $A_k$ et le retard $R_k$.

Les sorties des étages sont dirigées vers N' opérateurs de post-rotation, repérés $F_0...F_i...F_{N'-1}$ et analogues à l'opérateur 10, dont les résultats sont sommés (additionneur A) pour fournir le signal de sortie $s_{m+1}$.

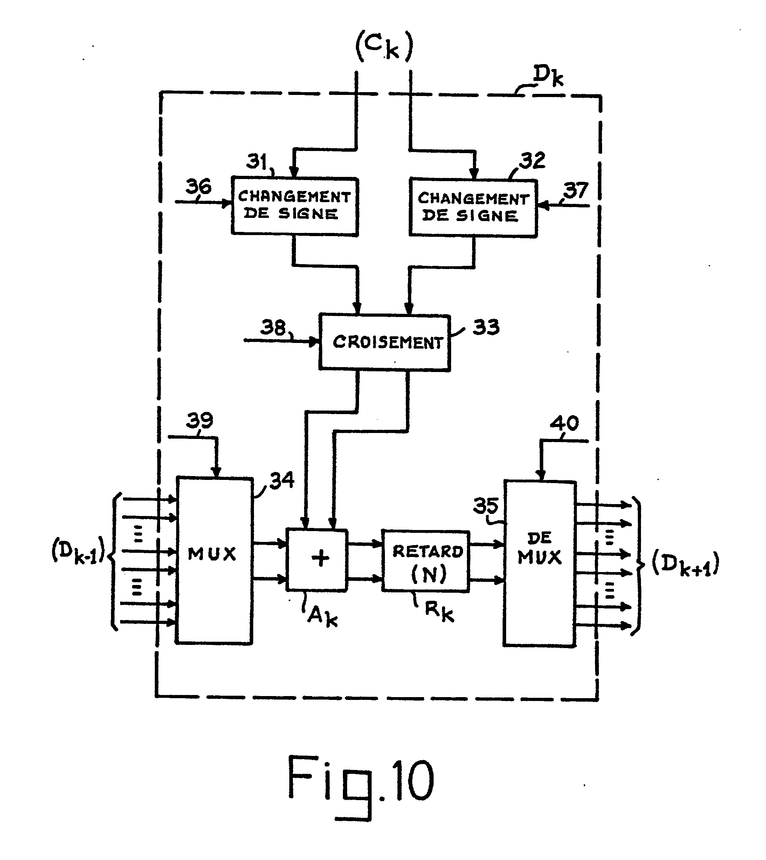

La figure 10 représente, à titre d'exemple, un mode de réalisation pratique de la partie D de chaque étage, par exemple la partie $D_k$.

Le complément de post-rotation à apporter au niveau de chaque étage, par rapport à la post-rotation effectuée dans le premier quadrant par les blocs F (figure 9), est réalisé ici comme exposé plus haut pour le complément de pré-rotation. Plus précisément, on réalise, le cas échéant, un changement de signe et ou un croisement partie réelle-partie imaginaire de la grandeur complexe fournie par la partie $C_k$ de l'étage, avant addition à la grandeur complexe fournie par l'étage précédent ($D_{k-1}$).

A cet effet, le bloc $D_k$ comporte deux dispositifs de changement de signe, 31 et 32, recevant respectivement la partie réelle et la partie imaginaire de la grandeur fournie par le bloc $C_k$. Le changement de signe est réalisé ou non, sur commande (36 et 37) du séquenceur.

Les sorties des dispositifs 31 et 32 sont reliée à un dispositif 33 qui réalise, le cas échéant, le croisement partie réelle-partie imaginaire, sur commande (38) du séquenceur.

Par ailleurs, le bloc $D_k$ reçoit, sur un multiplexeur 34, la partie réelle et la partie imaginaire des grandeurs complexes élaborées par les étages précédents, réparties en un bus de deux fois N' connexions, N' étant le nombre de valeurs distinctes de post-rotations à effectuer (blocs F, figure 9). Le multiplexeur 34 fournit, sur commande (39) du séquenceur, la partie réelle et la partie imaginaire de la grandeur à additionner (additionneur $A_k$) à la valeur de l'étage d'ordre $\underline{k}$ considéré.

Le résultat de l'addition est retardé (retard $R_k$) puis, par l'intermédiaire d'un démultiplexeur 35 commandé également par le séquenceur (commande 40), délivré sur un bus de deux fois N' connexions identique au bus d'entrée, à l'intention de l'étage suivant ($D_{k+1}$).

Bien entendu, le bloc $D_0$ diffère du bloc $D_k$ en ce qu'il ne nécessite pas les éléments 34 et $A_k$, et le bloc $D_{N-1}$, l'élément $R_k$.

Il est à noter que, dans la description qui précède, on travaille dans la bande de fréquence [0 ; B[. Or, du fait que l'échantillonnage est fait à la fréquence $f_e = B$, tout est modulo B. En conséquence, on peut travailler de la même manière dans n'importe quelle bande de fréquence de largeur B. Plus particulièrement, on peut choisir la bande suivante ;

$$ f \in \left[ -\frac{B}{2} ; +\frac{B}{2} \right[ $$

Cela conduit à des composantes X de fréquence négative. Toutefois, comme on sait que :

$$ \exp\left\{ j.2\pi.k\,\frac{N}{N} \right\} = 1 \; k, $$

il est évident que $X_{-k} \equiv X_{N-k}$, ce qui permet de se ramener à des composantes X de fréquence positive.

## Revendications

1. Dispositif de calcul d'une transformée de Fourier discrète et glissante sur une fenêtre temporelle de durée T, fournissant N composantes $X_k^{m+1}$ de ladite transformée à partir de N échantillons $x_{m+N}$ d'un signal d'entrée dont on veut calculer la transformée où $\underline{k}$ est l'indice de la composante, avec $0 \leq k < N$, et $\underline{m}$ l'indice de la fenêtre ; le dispositif de calcul étant caractérisé par le fait que, le nombre N étant choisi multiple de quatre, le dispositif comporte :
- N étages (E, C, D) fournissant chacun une desdites composantes, définie par :

$$X^m_k = X'^m_k \cdot \exp\left\{j.2\pi. \frac{m.k}{N}\right\}$$

avec :

$$X'^{m+1}_k = X'^m_k + x'_{m+N} - x'_m$$

- N′ ensembles de pré-rotation complexe (B) avec N′ = N/4, comportant chacun un premier opérateur de rotation complexe (10) recevant lesdits échantillons pour effectuer l'opération de rotation complexe selon l'expression

$$x'_m = x_m \cdot \exp\left\{- j.2\pi. \frac{m.k}{N}\right\}$$

ladite pré-rotation, étant décomposée en une opération de pré-rotation dans le premier quadrant du plan complexe et un complément de pré-rotation d'un nombre entier de quadrants, la rotation dans le premier quadrant étant réalisée pour N′ valeurs possibles respectivement par les N′ opérateurs de rotation des N′ ensembles de pré-rotation (B), et fournies en parallèle aux N étages, chaque étage comportant en outre :
- des moyens de sélection (7) de l'une parmi les N′ valeurs fournies par les N′ ensembles de pré-rotation;
- des moyens (8, 9) appliquant le complément de pré-rotation spécifique à l'étage considéré.

2. Dispositif selon la revendication 1, caractérisé par le fait que chacun des N′ ensembles de pré-rotation complexe (B) comporte en outre :
- un premier circuit de retard (2) recevant la grandeur issue du premier opérateur de rotation (10) et le retardant de N périodes d'échantillonnage ;
- des moyens de soustraction (3) de la grandeur issue du premier circuit de retard (2) à celle issue du premier opérateur de rotation (10), la grandeur issue des moyens de soustraction (3) constituant la grandeur de sortie de l'ensemble de pré-rotation.

3. Dispositif selon la revendication 2, caractérisé par le fait que chaque étage comporte en outre :
- des moyens d'addition (4) de la grandeur issue des moyens de soustraction (3) à celle $X'_k{}^{m+1}$ précédemment calculée par ces moyens d'addition ;
- un deuxième circuit de retard (5) recevant la grandeur $X'_k{}^{m+1}$ issue des moyens d'addition (4), la retardant d'une période d'échantillonnage et la fournissant alors aux moyens d'addition (4) ;
- un deuxième opérateur de rotation complexe (6), recevant la grandeur $X'_k{}^{m+1}$ issue des moyens d'addition (4) et lui faisant subir une rotation complexe, dite post-rotation, permettant d'obtenir ladite composante $X_k{}^{m+1}$ définie par l'équation (1).

4. Dispositif selon la revendication 2, caractérisé par le fait que, pour chaque étage, les moyens (9) appliquant le complément de pré-rotation assurent simultanément l'addition de la grandeur issue des moyens de soustraction (3) à celle précédemment calculée, et que l'étage comporte de plus ;
- un deuxième circuit de retard (5) recevant la grandeur $X'_k{}^{m+1}$ issue des moyens précédents (9), la retardant d'une période d'échantillonnage et la fournissant alors à ces mêmes moyens précédents (9) ;
- un deuxième opérateur de rotation complexe (6), recevant la grandeur $X'_k{}^{m+1}$ issue desdits moyens précédents (9) et lui faisant subir une rotation complexe dite post rotation, permettant d'obtenir ladite composante $X_k{}^{m+1}$ définie par l'équation (1).

5. Dispositif selon l'une des revendications précédentes, caractérisé par le fait qu'au moins l'un des opérateurs de rotation complexe (10, 6) comporte quatre mémoires (51-54) recevant la partie réelle ou la partie imaginaire de la composante à laquelle il faut faire subir une rotation complexe du type

$$\exp\left\{j.2\pi\frac{K}{N}\right\}$$

et fournissant en sortie le produit de la grandeur qu'elles ont reçu en entrée par la partie réelle ou la partie imaginaire de l'exponnentionelle ci-dessus, les sorties des mémoires étant sommées (55, 56) de façon à fournir la partie réelle et la partie imaginaire de la grandeur de sortie.

6. Application du dispositif de calcul, selon l'une des revendications précédentes, à un système radar, ce dernier comportant une chaîne de réception du signal radar, elle-même comportant des moyens pour réaliser un filtrage adapté et une compression d'impulsion, caractérisée par le fait que ces moyens sont réalisés à l'aide dudit dispositif de calcul.

7. Application selon la revendication 6, caractérisée par le fait que les sorties des différents étages (Ek) sont aditionnées entre elles à l'aide de moyens additionneurs (Ak).

8. Application selon la revendication 7, caractérisée par le fait que chacune des sorties des différents étages est reliée à un aditionneur (Ak), addtionnant le signal issu des étapes précédents à celui de l'étape considéré, et à un circuit de retard (Rk) faisant subir au signal qu'il reçoit un retard N périodes d'échantillonnage.

9. Application selon l'une des revendications 6 à 8, caractérisé par le fait que les sorties des différents étages (Ek) comportent des moyens de pondération (Pk) en amplitude.

10. Application selon la revendication 1 et l'une des revendications 6 à 9, caractérisée par le fait que l'opération de rotation complexe

$$j.2\pi.\frac{m.k}{N}$$

de l'expression (1), dite post-rotation, est décomposée en une opération de post-rotation dans le premier quadrant du plan complexe et un complément de post-rotation d'un nombre entier de quadrants, chacun des étages comportant à cet effet des moyens (D) d'application de ce complément, spécifique à chaque étage, le dispositif comportant en outre N′ ensembles de post-rotation complexe (F) recevant les signaux de sortie de chacun des étages, élaborant la post-rotation dans le premier quadrant pour les N′ valeurs possibles, respectivement, et les affectant aux dits signaux de sortie.

**Claims**

1. A device for calculating a discrete Fourier-transform sliding according a time slot of duration T, delivering N components $X_k^{m+1}$ of said transform from N samples x to $x_{m+N}$ of an input signal, whose transform is to be calculated, where k is the index of the component, with $0 \le k < N$ and m is the index of the slot, characterized in that, number N being chosen to be a multiple of four, the device comprises:
   — N stages (E, C, D) each delivering one of said components, which is defined by:

$$X_k^m = X_k'^m \cdot \exp\left\{j.2\pi. \frac{m.k}{N}\right\}$$

wherein:

$$X_k'^{m+1} = X_k'^m + x'_{m+N} - x'_m$$

   — N′ groups of complex pre-rotation (B), with N′ = N/4, each comprising a first complex rotation operator (10), which receives said samples in order to carry out said complex rotation according to the expression

$$x'_m = x_m \cdot \exp\left\{- j.2\pi. \frac{m.k}{N}\right\}$$

said pre-rotation being divided into a pre-rotation operation performed in the first quadrant of the complex plane and a pre-rotation complement by an integer number of quadrants, said rotation performed in the first quadrant being realized on behalf of N′ possible values respectively by the N′ rotation operators of the N′ pre-rotation groups (B) and delivered in parallel to the N stages, each stage comprising in addition:
   — means (7) for selecting one value among the N′ values provided by the N′ pre-rotation groups;
   — means (8, 9) for applying the pre-rotation complement which is specific to the related stage.

2. A device according to claim 1, characterized in that each of the N′ complex pre-rotation groups (B) further comprises:
   — a first delay circuit (2) adapted to receive the value output from the first rotation operator (10) and to delay it for a duration of N sampling periods,
   — means (3) for subtracting the value output from the first delay circuit (2) from the value output from the first rotation operator (10), the value output from the subtraction means (3) constituting the output value of the pre-rotation group.

3. A device according to claim 2, characterized in that each stage further comprises:
   — means (4) for adding the value output by the subtraction means (3) to the one $X_k'^{m+1}$ previously calculated by said adding means;
   — a second delay circuit (5) receiving the value $X_k'^{m+1}$ output by the adding means (4), delaying said value for a duration of one sampling period, and delivering it to the adding means (4);

– a second complex rotation operator (6), receiving the value $X'_k{}^{m+1}$ output by the adding means (4) and subjecting said value to a complex rotation referred to as post-rotation, with consequently obtaining said component $X_k{}^{m+1}$ as defined by the equation (1).

4. A device according to claim 2, characterized in that, in each stage, the means (9) applying the pre-rotation complement simultaneously ensure the addition of the value output by the subtraction means (3) to the one previously calculated; and that the stage further comprises:

– a second delay circuit (5) receiving the value $X'_k{}^{m+1}$ output by the preceding means (9), delaying said value for a duration of one sampling period, and delivering it to the adding means (4),

– a second complex rotation operator (6), receiving the value $X'_k{}^{m+1}$ output by said preceding means (9) and subjecting said value to a complex rotation referred to as post-rotation, with consequently obtaining said component $X_k{}^{m+1}$ as defined by the equation (1).

5. A device according to anyone of the preceding claims, characterized in that at least one of the complex rotation operators (10, 6) comprises four memories (51–54) adapted to receive the real part or the imaginary part of the component, which is to be subjected to a complex rotation of the type exp. (j2π.k/N), and to deliver at the output the product of the value, received by the memories at the input with the real part or the imaginary part of the above quoted exponent, the outputs of the memories being summed up (55, 56) so as to deliver the real part and the imaginary part of the output value.

6. The application of the calculation device according to anyone of the preceding claims in a radar system, said system comprising a reception chain of the radar signal, which chain in turn comprises means for performing an adapted filtering and a pulse compression, characterized in that said means are implemented by means of said calculation device.

7. The application according to claim 6, characterized in that the outputs of the various stages (Ek) are added to one another by means of adders (Ak).

8. The application according to claim 7, characterized in that each of the ouputs of the various stages is connected as well to an adder (Ak) adapted to add the signal output by the preceding stages to the signal of the related stage, as to a delay circuit (Rk) adapted to subject the received signal to a delay of N sampling periods.

9. The application according to one of the claims 6 to 8, characterized in that the outputs of the various stages (Ek) comprise amplitude weighting means (Pk).

10. The application according to claim 1 and to one of claims 6 to 9, characterized in that the complex rotation operation j · 2π m ·k/N of the expression (1), referred to as post-rotation, is subdivided into a post-rotation operation in the first quadrant of the complex plane and a post-rotation complement by an integer number of quadrants, each of the stages comprising to this effect means (D) for applying this complement which is specific to each stage, the device further comprising N′ complex post-rotation groups (F) adapted to receive the output signals of each stage, to elaborate the post-rotation in the first quadrant for the N′ possible values respectively, and to allocate them to said output singnals.

## Patentansprüche

1. Einrichtung zur Berechnung einer diskreten und über ein Zeitfenster der Dauer T gleitenden Fourier-Transformierten, die N Komponenten $X_k{}^{m+1}$ der Transformierten aus N Proben von x bis $x_{m+N}$ eines Eingangssignals liefert, von dem die Transformierte berechnet werden soll, wobei k der Index der Komponente mit $0 \leq k < N$, und m der Index des Fensters ist, dadurch gekennzeichnet, daß bei Wahl von N als ein Vielfaches von vier die Einrichtung folgende Bestandteile aufweist:

– N Stufen (E, C, D), die je eine der genannten Komponten liefern, die definiert ist durch:

$$X_k^m = X'^{m}_k \cdot \exp\left\{ j.2\pi. \frac{m.k}{N} \right\}$$

mit:

$$X'^{m+1}_k = X'^{m}_k + x'_{m+N} - x'_m$$

– N′ komplexe Vorrotationsgruppen (B) mit N′ = N/4, die je einen komplexen Rotationsoperator (10) aufweisen, der die Proben zur Durchführung der komplexen Rotationsoperation gemäß der Formel:

$$x'_m = x_m \cdot \exp\left\{ - j.2\pi. \frac{m.k}{N} \right\}$$

empfängt, wobei die Vorrotation in eine Vorrotationsoperation im ersten Quadranten der komplexen Ebene und in ein Komplement der Vorrotation um eine ganzzahlige Anzahl von Quadranten aufgegliedert ist und die Drehung im ersten Quadranten für N′ mögliche Werte jeweils durch die N′ Rotationsoperatoren der N' Vorrotationsgruppen (B) ausgeführt und parallel an die N Stufen geliefert wird, wobei jede Stufe weiter aufweist:
- Mittel (7) zur Auswahl eines der N' Werte, die von den N' Vorrotationsgruppen geliefert werden; und
- Mittel (8, 9) zum Anlegen des für die betrachtete Stufe spezifischen Komplements der Vorrotation

2. Einrichtung nach Anspruch 1, dadurch gekennzeichnet, daß jede der N' komplexen Vorrotationsgruppen (B) weiter aufweist:
- eine erste Verzögerungsschaltung (2), die die vom ersten Rotationsoperator (10) ausgegebene Größe empfängt und um N Probenahmeperioden verzögert,
- Mittel (3) zum Subtrahieren der von der ersten Verzögerungsschaltung (2) ausgegebenen Größe von der vom ersten Rotationsoperator (10) ausgegebenen Größe, wobei die von den Stubtraktionsmitteln (3) ausgegebene Größe die Ausgangsgröße der Vorrotationsgruppe bildet.

3. Einrichtung nach Anspruch 2, dadurch gekennzeichnet, daß jede Stufe weiter aufweist:
- Mittel (4) zum Addieren der von den Subtraktionsmitteln (3) ausgegebenen Größe zu der vorher von diesen Additionsmitteln berechneten Größe $X'_k{}^{m+1}$,
- eine zweite Verzögerungsschaltung (5), die die von den Additionsmitteln (4) ausgegebene Größe $X'_k{}^{m+1}$ empfängt, um eine Probenahmeperiode verzögert und dann an die Additionsmittel (4) liefert,
- einen zweiten komplexen Rotationsoperator (6), der die von den Additionsmitteln (4) ausgegebene Größe $X'_k{}^{m+1}$ empfängt und sie einer komplexen Drehung, Nachrotation genannt, unterzieht, wodurch die durch die Gleichung (1) definierte Komponente $X_k{}^{m+1}$ erhalten wird.

4. Einrichtung nach Anspruch 2, dadurch gekennzeichnet, daß für jede Stufe die Mittel (9) zum Anlegen des Komplementes der Vorrotation gleichzeitig die Addition der von den Subtraktionsmitteln (3) ausgegebenen Größe mit der vorher berechneten Größe bewirken, und daß die Stufe weiter aufweist:
- eine zweite Verzögerungsschaltung (5), die die von den eben genannten Mitteln (9) ausgegebene Größe $X'_k{}^{m+1}$ empfängt, um eine Probenahmeperiode verzögert und dann an diese Mittel (9) liefert, und
- einem zweiten komplexen Rotationsoperator (6), der die von den Additionsmitteln (4) aufgegebene Größe $X'_k{}^{m+1}$ empfängt und sie einer komplexen Drehung, Nachrotation genannt, unterzieht, wodurch die durch die Gleichung (1) definierte genannte Komponente $X_k{}^{m+1}$ erhalten wird.

5. Einrichtung nach einem der vorhergehenden Ansprüche, dadurch gekennzeichnet, daß mindestens einer der komplexen Rotationsoperatoren (10, 6) vier Speicher (51–54) besitzt, welche den Realteil oder den Imaginärteil derjenigen Komponente empfangen, die einer komplexen Drehung vom Typ exp. (j · 2π k/N) zu unterziehen ist, und welche am Ausgang das Produkt der am Eingang empfangenen Größe mit dem Realteil oder dem Imaginärteil des vorstehenden Exponenten liefert, wobei die Ausgänge der Speicher summiert werden (55, 56), derart, daß der Realteil und der Imaginärteil der Ausgangsgröße geliefert werden.

6. Anwendung der Recheneinrichtung gemäß einem der vorhergehenden Ansprüche auf ein Radarsystem, das eine Empfangskette für das Radarsignal aufweist, die ihrerseits Mittel zur Durchführung einer angepaßten Filterung und einer Impulskompression besitzen, dadurch gekennzeichnet, daß diese Mittel mit Hilfe der Recheneinrichtung verwirklicht werden.

7. Anwendung nach Anspruch 6, dadurch gekennzeichnet, daß die Ausgänge der verschiedenen Stufen (Ek) mit Hilfe von Addiermitteln (Ak) miteinander addiert werden.

8. Anwendung nach Anspruch 7, dadurch gekennzeichnet, daß jeder der Ausgänge der verschiedenen Stufen sowohl an einen Addierer (Ak), der das von den vorhergehenden Stufen gelieferte Signal zu dem der betrachteten Stufe hinzuaddiert, als auch an eine Verzögerungsschaltung (Rk) angeschlossen ist, die das von ihm empfangene Signal um N Probenahmeperioden verzögert.

9. Anwendung nach einem der Ansprüche 6 bis 8, dadurch gekennzeichnet, daß die Ausgänge der verschiedenen Stufen (Ek) Mittel (Pk) zur Gewichtung der Amplitude aufweisen.

10. Anwendung nach Anspruch 1 und einem der Ansprüche 6 bis 9, dadurch gekennzeichnet, daß die komplexe Rotationsoperation j · 2π m · k/N des Ausdrucks (1), Nachrotation genannt, in eine Nachrotationsoperation im ersten Quadranten der komplexen Ebene und ein Komplement der Nachrotation um eine ganzzahlige Anzahl von Quadranten gegliedert ist, wobei jede Stufe zu diesem Zweck Mittel (D) zur Anwendung dieses für jede Stufe spezifischen Komplements aufweisen, und die Einrichtung weiter N' komplexe Nachrotationsgruppen (F) besitzt, welche die Ausgangssignale jeder Stufe empfangen, jeweils die Nachrotation im ersten Quadranten für die N' möglichen Werte ausführen, und sie den genannten Ausgangssignalen zuweisen.

$\mathfrak{X}_{m+N}$

ÉTAGE $E'_0$

$x'_{m+N}$

RETARD (N)    2    $x'_m$

1

$E'_k$

+ SOUS-TRACTEUR

3

$\delta_m = x'_{m+N} - x'_m$

4

$X'^m_k$    +    $X'^{m+1}_k$

RETARD (1)

5

6

ÉTAGE $E'_{N-1}$

$X^{m+1}_0$

$X^{m+1}_k$

$X^{m+1}_{N-1}$

Fig.1

(B)

SÉLECTEUR    7

$X'^m_k$    9    $X'^{m+1}_k$

$\pm$

$E_k$

RETARD (1)

5

6

$X^{m+1}_k$

Fig.3

Fig.2

EP 0 223 657 B1

Fig.4

Fig.5

# Fig.6

# Fig.7

Fig.8

EP 0 223 657 B1

$e_{m+N}$

PRÉ-ROTATION $B_0$ ____ $B_i$ PRÉ-ROTATION ___ PRÉ-ROTATION $B_{N'-1}$

7 SÉLECTION $C_0$ $C_k$ $C_{N-1}$ **Fig.9**

9 $+$ $-$

RETARD

5

COMPLÉMENT DE POST-ROTATION $D_0$ $D_k$ $D_{N-1}$

$F_0$ POST-ROTATION

$F_i$ POST-ROTATION

$F_{N'-1}$ POST-ROTATION

A $+$ $s_{m+1}$

EP 0 223 657 B1

Fig.10